# EUROPÄISCHE PATENTSCHRIFT

(11) **EP 0 357 653 B1**
(45) Veröffentlichungstag und Bekanntmachung des Hinweises auf die Patenterteilung: **19.01.1994**
(21) Anmeldenummer: 88903836.0
(22) Anmeldetag: 05.05.1988
(51) Int. Cl.: B01J 8/08, B01J 8/12, B01D 53/08, B01D 53/34

(54) **ANSTRÖMBODEN FÜR WANDERBETTREAKTOREN**
FEED INLET FLOOR FOR MOBILE BED REACTORS
PARTIE INFERIEURE D'ADMISSION POUR REACTEURS A LIT MOBILE

(30) Priorität: 07.05.1987 DE 8706539 U; 26.09.1987 DE 3732567
(43) Veröffentlichungstag der Anmeldung: 14.03.1990
(60) Teilanmeldung: 92121080.3
(73) Patentinhaber: GROCHOWSKI, Horst, D-46117 Oberhausen (DE)
(72) Erfinder: GROCHOWSKI, Horst, D-46117 Oberhausen (DE)
(74) Vertreter: Schumacher, Horst, Dr. Dipl.-Phys.
(86) Internationale Anmeldenummer: EP8800380
(87) Internationale Veröffentlichungsnummer: WO8808746

(56) Entgegenhaltungen:
- WO-A-87/00768
- DE-A- 3 232 544
- DE-C- 883 598
- DE-C- 914 125
- GB-A- 2 116 869

## Beschreibung

Die Erfindung betrifft einen Anströmboden für Wanderbettreaktoren, sowie ein Verfahren zum Betreiben dieser Vorrichtung.

Wanderbettreaktoren werden für Behandlungen von Fluiden an mehr oder minder feinteiligen Schüttgütern verwendet. Das Schüttgut bildet ein von oben nach unten durch den Reaktor wanderndes Schüttgutbett und wird in den Reaktor oben eingetragen und unten kontinuierlich oder quasi kontinuierlich ausgetragen. Im Bereich des Schüttgutaustrages aus der Behandlungszone ist ein sogenannter Anströmboden angeordnet, der einerseits Austrittsöffnungen für das Schüttgut und andererseits Eintrittsöffnungen für das zu behandelnde Fluid aufweist.

Ein Ziel bei solchen Wanderbettreaktoren ist es, eine möglichst gleichmäßige Behandlung des Fluides zu gewährleisten. Dieses Ziel wird einerseits durch besonders gleichmäßige Strömungsverhältnisse des Fluides und andererseits durch möglichst gleichmäßige Wanderverhältnisse des Schüttgutes erreicht. Bei im Gegenstrom betriebenen Wanderbettreaktoren ist ein planparalleles Abziehen aller Schüttgutpartikel besonders schwierig - vor allem dann, wenn das Fluid geeignet ist, den Anströmboden partiell oder sogar ganz zuzusetzen.

Aus der DE-C-883 598 ist ein Anströmboden für Wanderbettreaktoren bekannt, der aus parallel zueinander angeordneten trichterförmigen Schüttgutabzugsrinnen besteht, wobei in den jalousieförmig ausgebildeten Trichterseitenwänden die Jalousieschlitze als Durchtrittsöffnungen für Anströmfluid dienen, welche sich entlang der Rinne erstrecken. Dachförmige Verteilelemente können entweder der Verteilung von Anströmfluid oder lediglich dem Schüttgutabzug dienen, während der Durchgang des gasförmigen Mittels getrennt von dem des Adsorptionsmittels durch den Boden erfolgt. Bei dem bekannten Anströmboden sind die Verteilelemente oberhalb der Mündungsöffnung am Boden der trichterförmigen Rinnen angeordnet.

Aus der DE-A-3 232 544 ist es bei einem Verfahren zum Entfernen von Schwefel- und Stickstoffoxiden aus einem Abgas durch eine Trockenbehandlung bekannt, das Abgas durch ein aus einem kohlehaltigen Adsorptionsmittel gebildetes Wanderbett zu leiten und die Stickstoffoxide durch die reduzierende Wirkung von Ammoniak gleichzeitig mit den Schwefeloxiden zu entfernen, wobei das Ammoniak dem aus dem kohlehaltigen Adsorptionsmittel bestehenden Wanderbett direkt zugegeben wird.

Ausgehend von dem vorerwähnten Stand der Technik liegt der Erfindung die Aufgabe zugrunde, eine verbesserte Fluidverteilung bei bestmöglichem, insbesondere planparallelem Abzugsverhalten des Schüttgutes zu gewährleisten und ein besonders vorteilhaftes Verfahren zum Betreiben dieser Vorrichtung anzugeben. Demnach ist also eine optimierte Fluidverteilung als auch ein optimiertes Feststoff-Abzugsverhalten erwünscht.

Bei der erfindungsgemäßen Lösung dieser Aufgabe nach Anspruch 1 steht die verbesserte Fluidverteilung besonders im Vordergrund, während bei der alternativen Lösung nach Anspruch 4 ein besonders gutes Schüttgut-Abzugsverhalten dargestellt ist.

Erfindungsgemäß erfolgt der Eintritt des Anströmfluides in die Behandlungszone also in einem Bereich frei ausgebildeter Schüttgutoberflächen, die unmittelbar hinter derjenigen Stelle entstehen, an der, das Schüttgut aus der Behandlungszone austritt.

Die ersten Schüttgutabzugstrichter sind vorzugsweise auch hintereinander, insbesondere wabenförmig, bevorzugt flächendeckend angeordnet. Im Falle der Verwendung erster trichterförmiger Schüttgutabzugsrinnen werden vorzugsweise mehrere solcher ersten trichterförmigen Schüttgutabzugsrinnen parallel zueinander angeordnet.

Erfindungsgemäß ist die Anordnung der Verteilelemente so gewählt, daß die Verteilelemente an den Innenseiten der Trichter- oder Rinnenseitenwände beginnen und zum Trichter- bzw. Rinneninneren hin abstehen, wobei mehrere Verteilelemente entlang der Trichter- bzw. Rinnenwandung verteilt angeordnet sind. Dadurch, daß nach Anspruch 1 die dachförmigen Verteilelemente oberhalb der in den Trichter- bzw. Rinnenseitenwänden vorgesehenen Durchtrittsöffnungen für ein Fluid angeordnet sind, tritt das Fluid an einer Stelle in die Schüttgutschicht ein, bei der eine eine Senke bildende freie Schüttgutoberfläche aufgrund des oberhalb der Durchtrittsöffnung angeordneten dachförmigen Verteilelementes existiert, wobei diese Senken an den Seitenwänden beginnen und sich zum Trichter- bzw. Rinneninneren hin erstrecken. Bei der alternativen Ausführungsform gemäß Anspruch 4 sind die Verteilelemente (auch) oberhalb der Schüttgutaustrittsmündung angeordnet.

Es hat sich gezeigt, daß die Anordnung nach Anspruch 1 trotz relativ großer Rastermaße des Anströmbodens eine außerordentlich gleichmäßige Fluidverteilung über den gesamten Behälterquerschnitt gewährleistet. Insbesondere werden Verbackungen, Verklebungen oder ein ähnliches Zusetzen der Schüttgutschicht im Bereich der Fluiddurchtrittsöffnungen vermieden. Gerade dieses Problem ist bei den bekannten Wanderbettreaktoren mit jalousieartigen Fluidanströmflächen nur sehr unbefriedigend gelöst. Da Verklebungen oder ähnliche Störungen der Schüttgutschicht im Bereich der Fluiddurchtrittsöffnungen vermieden werden, wird durch diese Lösung auch das Schüttgutabzugsverhalten verbessert.

Durch die alternative Lösung nach Anspruch 4 wird u. a. erreicht, daß die Schüttgutpartikel im wesentlichen planparallel abgezogen werden können, ohne daß dadurch eine allzu große Bauhöhe des Anströmbodens oder sonstige aufwendige Konstruktionen in Kauf genommen werden müssen. Durch die konstruktiv besonders einfache Möglichkeit des planparallelen Schüttgutabzuges nach Anspruch 4 wird die Gleichmäßigkeit der Fluidverteilung ebenfalls gefördert, da alle übereinander liegenden horizontalen Schüttgutpartikelschichten gleichmäßig beladen sind und lokale Nester besonderer Kontamination oder gar Verklebung vermieden werden.

Durch die Erfindung wird ferner erreicht, daß die Querschnitte für den Schüttgutabzug im Vergleich zu dem Wanderbettquerschnitt vorteilhaft klein sein können - und zwar auch in ihrer Summe, das heißt daß große Absenktiefen im einzelnen Schüttgutabzugsrohr oder -Öffnung nur zu geringen Bettabsenkungen führen.

Ein erfindungsgemäßer Anströmboden hat weiterhin den Vorteil, daß mit ihm eine relativ große freie Anströmfläche realisiert werden kann. Gleichwohl wird das Fluid äußerst gleichmäßig über den Wanderbettreaktorquerschnitt verteilt und wird der sogenannte Kernfluß des Schüttgutes am Schüttgutabzug unterbunden. Außerdem kann das Schüttgut im Vergleich zum Rastermaß des Anströmbodens außerordentlich geringe Partikeldurchmesser aufweisen.

Wenn der Einfachheit halber nachfolgend nur von "Trichtern" die Rede ist, so sind damit sinngemäß auch die im Querschnitt trichterformigen Rinnen gemeint.

Die unten offenen dachförmigen Verteilelemente verteilen - wie oben erwähnt - das durch die Durchtrittsöffnungen in der Seitenwand der Schüttgutabzugstrichter in den Trichterinnenraum einströmende Anströmfluid (nämlich das zu behandelnde Fluid) auf einen im Vergleich zum Querschnitt der Durchtrittsöffnung relativ großen Anströmquerschnitt (freie Anströmfläche), nämlich die sich unterhalb des Verteilelementes natürlich ausbildende Schüttgutoberfläche. Die Fluidströmungsgeschwindigkeit unterhalb des Anströmbodens, z. B. im sogenannten Windkasten Des Anströmbodens, kann also punktuell verhältnismäßig groß sein, ohne daß dadurch die Gleichmäßigkeit der Fluidanströmung in der Behandlungszone des Wanderbettreaktors ungünstig beeinflußt wird. Durch die erfindungsgemäße Anordnung ist es daher möglich, die mit dem Anströmfluid etwa mitgeführten, die Behandlung störenden Partikel und/oder Mischungskomponenten genau an der Stelle aus dem Anströmfluid durch Ablagerung auf den Schüttgutpartikeln abzuscheiden, an denen das Anströmfluid in die Behandlungszone ein- und das Schüttgut aus der Behandlungszone austritt. Das in der Behandlungszone sich befindende Schüttgut wird also durch solche "Verschmutzungen" nicht kontaminiert und die Fluidströmungsverhältnisse in der Behandlungszone werden nicht mehr durch verschmutzungsbeladene Schüttgutpartikel verungleichmäßigt, wie es bei den bisher bekannten Wanderbettreaktoren der Fall war. Weiterhin werden sogenannte hot-spots in der wandernden Schüttgutschicht ebenfalls unterbunden. Wenn Gleich viele Schüttgutzuteilrohre oder -schächte und Schüttgutaustrittsmündungen (zwischen den ersten Schüttgutabzugstrichtern und den Verteilelementen) vorgesehen und versetzt zueinander angeordnet sind, wie dies aus der WO 87/00768 bekannt ist, ist es ferner möglich, mit vorteilhaft kleinen Betthöhen zu arbeiten und relativ große Reaktorquerschnitte zu realisieren, ohne unerwünschte Nebeneffekte in Kauf nehmen zu müssen.

Durch die erfindungsgemäße Anordnung wird ein modularer Aufbau des Anströmbodens ermöglicht, wenn jedes Modul aus einem fertig hergestellten Schüttgutabzugstrichter besteht, der von einer einzigen Person gehandhabt werden und in ein rasterförmiges Traggerüst im Bodenbereich des Wanderbettreaktors eingehängt werden kann. Grundsätzlich ist die Trichterquerschnittsform frei wählbar. Trichterquerschnitte, die eine flächendeckende Anordnung über den gesamten Reaktorquerschnitt gewährleisten, werden jedoch bevorzugt, also z. B. Schüttgutabzugstrichter mit dem Querschnit eines gleichseitigen Dreiecks oder Sechsecks oder solche mit rechteckigem, vorzugsweise quadratischem Querschnitt.

Erfindungsgemäße Schüttgutabzugstrichter werden vorzugsweise aus Metallblech oder auch aus Kunststoffen hergestellt, wobei Verbindungen an Nahtstellen insbesondere durch Schweißen herstellbar sind. Die Schüttgutabzugstrichter können sowohl lose in das wabenförmige Traggerüst eingehängt werden, als auch mit diesem verschraubt oder verschweißt werden. In jedem Fall empfiehlt es sich, an den Trichteraußenwandungen vorzugsweise winkelförmige Auflagestücke in versetzter Anordnung vorzusehen.

Die Zahl der an den Schüttgutabzugstrichtern umfangsverteilten Durchtrittsöffnungen und deren Querschnitte sowie Höhenverteilung ist grundsätzlich frei wählbar. Bei im Querschnitt vieleckigen Schüttgutabzugstrichtern ist an jeder Trichterseitenwandfläche mindestens eine Durchtrittsöffnung vorgesehen, wobei alle Durchtrittsöffnungen eines Schüttgutabzugstrichters vorzugsweise auf demselben Höhenniveau angeordnet sind und, insbesondere, die gleiche Querschnittsform und -größe haben. Es empfiehlt sich, die Durchtrittsöffnungen so groß wie möglich zu wählen, d. h. so groß wie es die Berührungslinie der Verteilelemente an den Trichterseitenwänden gestattet.

Die Verteilelemente sind zumindest im Bereich der Anschlußkanten der "Dachflächen" mit den Trichterseitenwänden dicht verbunden, z. B. durch durchgehende Schweißnähte. Die Verteilelemente ragen dann in den Trichterinnenraum hinein, wobei ihre "Dachfirste" vorzugsweise zur Trichtermitte hin weisen. Gemäß einer bevorzugten Ausführungsform der Erfindung sind die Verteilelemente der (ersten) Schüttgutabzugstrichter an ihren freien, d. h. von den Trichterseitenwänden fortweisenden Enden miteinander verbunden, wobei der Verbindungsbereich vorteilhafterweise oberhalb der Schüttgutaustrittsmündung des Schüttgutabzugstrichters angeordnet ist. Hierdurch wird einerseits die mechanische Stabilität des Schüttgutabzugstrichters und auch der Verbindung zwischen dessen Seitenwänden und den Verteilelementen trotz geringer Materialstärken spürbar erhöht. Durch die Anordnung des Verbindungsbereiches oberhalb der Schüttgutaustrittsmündung wird darüber hinaus die Gefahr eines Kernflusses des Schüttgutes im Schüttgutaustrittsbereich der Behandlungszone des Wanderbettreaktors völlig unterbunden; im Falle einer rinnenförmigen Ausgestaltung des Anströmbodens dient hierzu vor allem ein dachförmiges Verteilelement, das sich oberhalb und parallel zur Schüttgutaustrittsmündung der Schüttgutabzugsrinne erstreckt.

Die vorerwähnten, den Kernfluß unterbindenden Maßnahmen sind, insbesondere in Verbindung mit den übrigen Merkmalen der Erfindung auch dann besonders vorteilhaft anwendbar, wenn die Durchtrittsöffnungen unter den Verteilelementen in den Trichterwänden fehlen und die Verteilelemente folglich nur das Schüttgut auf mehrere Teiltrichter oder trichterförmige Teilrinnen des Anströmbodens verteilen.

Demgemäß wird als alternative Lösung, insbesondere zur Erzielung eines etwa planparallelen Schüttgutabzuges, ein Anströmboden für Wanderbettreaktoren mit einer freiwählbaren Verteilvorrichtung für das Anströmfluid, insbesondere mit einer freiwählbaren Anordnung von Durchtrittsöffnungen oder Eintrittskanten für Anströmfluid, nach Anspruch 4 vorgeschlagen. Bei dieser alternativen Ausführungsform der Erfindung stehen vorzugsweise (erste) dachförmige Verteilelemente von den Seitenwänden der Schüttgutabzugstrichter oder -rinnen derart zum Trichterinneren bzw. Rinneninneren hin ab, daß einander angrenzende Verteilelemente zusammen mit den Seitenwänden der Schüttgutabzugstrichter oder -rinnen Teiltrichter bilden. Auch bei dieser Ausführungsform wird es in der Regel bevorzugt, wenn das Anströmfluid lediglich im Bereich der unteren Kanten der Verteilelemente und/oder der unteren Kanten der Schüttgutabzugstrichter oder -rinnen in die Schüttgutschicht eintritt.

Wenn das Schüttgut hinreichend grobkörnig ist, kann es von Vorteil sein, auch in denjenigen Bereichen der Seitenwände der Schüttgutabzugstrichter oder -rinnen, die mit dem Schüttgut in Berührung stehen, Durchtrittsöffnungen für das Anströmfluid vorzusehen. In einer besonders großen Zahl von Anwendungsfällen wird man aber solche, zumeist nur zusätzlich vorgesehene Durchtrittsöffnungen vermeiden, oder sie zumindest so ausbilden bzw. abdecken, daß Schüttgut in sie nicht eintreten kann Derartige Abdeckungen oder besonders geformte Durchbrechungen verursachen also einen unerwünschten Mehraufwand, der aber dann erforderlich sein wird, wenn - wie sehr häufig - das Schüttgut auch Partikel mit von der Sollgröße abweichenden Kornabmessungen hat. Allein durch die mechanische Belastung beim Transport und beim Wandern der Schüttgutpartikel brechen eine mehr oder minder große Zahl von Partikeln in Bruchstücke aller Größenordnungen. Deshalb werden in den Trichterwänden vorgesehene Anströmfluid-Durchtrittsöffnungen sehr leicht zugesetzt; das ist bei den umströmten Unterkanten der dachförmigen Verteilelemente und der Trichter oder Rinnen nicht der Fall. Deshalb können das Trichter- bzw. Rinnengrundmaß, d. h. die Trichter- bzw. Rinnenbreite im Schüttguteintrittsbereich des Anströmbodens bzw. die Mittenabstände benachbarter Trichter oder Rinnen im Vergleich zum Korndurchmesser des Schüttgutes außergewöhnlich groß sein. Auf diese Weise können auch außerordentlich großflächige Anströmböden relativ preiswert und stabil sowie relativ leichtgewichtig hergestellt werden. Typische Rastergrundmaße des Trichter- bzw. Rinnenrasters betragen 100 mm bis 2000 mm. Bevorzugt werden Rastergrundmaße zwischen 300 mm und 800 mm; dies sind im Vergleich zu bekannten Anströmböden relativ grobe Rastermaße.

Die erfindungsgemäßen Schüttgutabzugstrichter können so in den Wanderbettreaktor eingebaut werden, daß ihre Schüttgutaustrittsöffnungen durch einen zweiten Boden unterhalb des Anströmbodens geführt sind, und zwar mit oder ohne rohrförmigen Verlängerungsstücken. Der Anströmboden und der darunterliegende zweite-Boden bilden dann zusammen mit der Reaktorwandung einen Verteilkasten für das Anströmfluid, das in diesen Raum eingeleitet wird. Bei dieser Ausführungsform kann das Anströmfluid ausschließlich durch die erfindungsgemäßen Durchtrittsöffnungen in den Seitenwänden der Schüttgutabzugstrichter in die Wanderschicht eintreten. Bevorzugt wird die Schüttgutabzugsmündung der erfindungsgemäßen ersten Schüttgutabzugstrichter aber so angeordnet oder ausgebildet, daß auch durch. diese Öffnungen hindurch Anströmfluid in die Wanderschicht eintreten kann. Dies wird vorzugsweise dadurch realisiert, daß unterhalb jedes ersten Schüttgutabzugstrichters mindestens ein zweiter Schüttgutabzugstrichter unter Bildung eines Fluiddurchtrittsspaltes und/oder mit fluiddurchlässigen, d. h. Durchbrechungen aufweisenden Wandungen angeordnet ist. Auf diese Weise wird vor allem der Randbereich der Schüttgutaustrittsöffnung aus dem ersten Schüttgutabzugstrichter von dem Anströmfluid umströmt; ähnliche Strömungsverhältnisse bilden sich im Bereich derjenigen Kanten der erfindungsgemäßen Verteilelemente aus, die von den "Dachflächen" mit der offenen Unterseite gebildet werden (Dachkanten).

Im Folie relativ feinkörniger Schüttgüter (Wanderbettmaterial) und/oder relativ großer Wanderbetthöhen, d. h. bei günstigen Fließeigenschaften, neigen die im Schüttgutabzugsbereich unter den Verteilelementen sich ausbildenden Schüttgutoberflächen zum allmahlichen sich Anheben. Um zu verhindern, daß in solchen Fällen das Schüttgut in die Fluidzuströmöffnungen überquillt, werden, gemäß einer Weiterbildung der Erfindung, schürzenähnliche Elemente, z. B. Bleche, an den Gasabströmkanten der Verteilelemente senkrecht nach unten angesetzt, so daß trotz maximalen Querschnitts der Durchtrittsöffnungen durch die Trichterseitenwände der freie Anströmquerschnitt im Anströmboden durch vorerwähnte Schutzmaßnahmen nicht verkleinert wird. Im Bereich des Fluiddurchtrittsspaltes zwischen den ersten und zweiten Schüttgutabzugstrichtern kann das vorerwähnte Überquellen des Schüttgutmaterials dadurch verhindert werden, daß die Mündung des ersten Schüttgutabzugstrichters niedriger als die Eintrittsöffnung des zweiten Schüttgutabzugstrichters angeordnet ist, also der erste in den zweiten Schüttguttrichter hineinragt Eine weitere vorteilhafte Maßnahme zur Vermeidung des "Überquellens" des Schüttgutes im Bereich der freien Schüttgutoberflächen im Anströmboden besteht darin, unterhalb der Verteilelemente Schüttgutscheidewände vorzusehen und diese vertikal anzuordnen.

Insbesondere bei einer rinnenförmigen Anordnung des Anströmbodens können, gemäß einer bevorzugten Ausführungsform der Erfindung, weitere dachförmige Verteilelemente, insbesondere der weiter oben erwähnten Art, vorgesehen sein, welche im Winkel, vorzugsweise im rechten Winkel, zu den übrigen Verteilelementen angeordnet und mit diesen im Sinne einer weiteren Fluidverteilung verbunden sind. Hierdurch kann u. a. die Zahl und Größe der Schüttgutabzugsmündungen noch besser vorgegeben werden. Auch die Anströmgeschwindigkeit des zu behandelnden Fluides beim ersten Kontakt mit dem Schüttgut wird hierdurch reduziert, weil die direkt angeströmten Oberflächenbereiche durch die zusätzlichen Verteilelemente vergrößert werden. Außerdem werden dadurch die Stabilität der Anströmrinne vergrößert und - wie weiter oben erwähnt - ein Kernfluß des Schüttgutes noch besser vermieden.

Sofern unterhalb des ersten Schüttgutabzugstrichters(-rinne) mindestens ein zweiter Schüttgutabzugstrichter(-rinne) angeordnet ist, kann der Schüttgutaustausch in dem etwa zwischen den beiden "Trichtern" vorgesehenen Fluiddurchtrittsspalt behindert sein und es insofern zu unerwünschten verstärkten Kontaminationen das Schüttgutes kommen, die insbesondere seine Fließfähigkeit aber auch seine Behandlungswirksamkeit beeinträchtigen. Um in diesem Bereich einen gleichmäßig guten Schüttgutaustausch zu gewährleisten, werden, gemäß einer anderen Weiterbildung der Erfindung, Schüttgutleitflächen vorgesehen, die bezüglich der Schüttgutwanderrichtung innerhalb das Querschnittes der Schüttgutaustrittsmündung des ersten Schüttgutabzugstrichters angeordnet sind Mittels dieser Schüttgutleitflächen kann ein bevorzugter Schüttgutabzug im Bereich des Fluiddurchtrittsspaltes zwischen den beiden Schüttgutabzugstrichtern bewirkt werden. Diese Wirkung kann durch folgende Maßnahmen verstärkt werden: Erstens können die Schüttgutleitflächen einen nach unten sich erweiternden Spalt mit je einer Wandfläche des zweiten Schüttgutabzugstrichters bilden, indem sie eine flachere Neigung als die Trichterwände erhalten. Zweitens können die Schüttgutleitflächen - kumulativ oder alternativ - zumindest partiell bewegbar sein, d. h., insgesamt bewegbar sein oder bewegbare Klappen aufweisen; hierdurch kann der Schüttgutabzug aus dem Zentrum der Austrittsmündung des Schüttgutabzugstrichters verändert werden, insbesondere zugunsten eines stärkeren Schüttgutabzuges im Bereich des Fluiddurchtrittsspaltes zwischen dem ersten und zweiten Trichter. Drittens kann - ebenfalls kumulativ oder alternativ - ein Schüttgut- und Fluid-Durchtrittsspalt zwischen den Schüttgutleitflächen und den Mündungskanten des ersten Schüttgutabzugstrichters vorgesehen sein. Dieser Durchtrittsspalt fördert die Schüttgutbewegung in unmittelbarer Nähe des Fluiddurchtrittsspaltes zwischen dem ersten und zweiten Schüttgutabzugstrichter.

Wenn, gemäß einer Weiterbildung der Erfindung, an den oder innerhalb der Verteilelemente/n und/oder an den Schüttgutabzugstrichtern Rohre oder dergleichen mit Zuteilöffnungen zur Beaufschlagung des zu behandelnden Fluides mit einem Behandlungsmedium angeordnet sind, wird dadurch erreicht, daß die Reaktion des Behandlungsmediums mit dem zu behandelnden Fluid erst beim Kontakt des zu behandelnden Fluides mit dem Schüttgut beginnen kann. Ein weiterer Vorteil dieser Rohre, die vorzugsweise die Kanten der Verteilelemente und/oder der Schüttgutabzugstrichter (zumindest teilweise) bilden, liegt in ihrer aussteifenden Wirkung auf den Anströmboden.

Wenn die Dachneigungswinkel der Verteilelemente den Seitenwandneigungswinkeln der Seitenwände der Schüttgutabzugstrichter entsprechen, wird hierdurch ein besonders gleichmäßiger Materialfluß beim Schüttgutabzug gewährleistet. Wenngleich die Trichterseitenwände konkav, konvex oder mehrfach gebogen geformt sein können, werden (in Schüttgutwanderrichtung) plan ausgebildete Seitenwände bevorzugt. Dies gilt auch für die nach oben weisenden Seitenflächen der Verteilelemente; dabei können die von den Verteilelementen bzw. benachbarter Schüttgutabzugstrichtern gebildeten "Dachfirste" zur Schonung des Schüttgutes gerundet sein. Typische Neigungswinkel der Seitenwände und Dachflächen der Verteilelemente liegen, unter Berücksichtigung der sogenannten Reibungswinkel, in der Regel zwischen 12° und 45°, bezogen auf die Vertikale.

Hinsichtlich eines Verfahrens zum Betrieben eines erfindungsgemäßen Anströmbodens für Wanderbettreaktoren wird vorgeschlagen, daß bei Verwendung eines derartigen Wanderbettreaktors als. Schüttgut ein Adsorbtionsmittel zum Adsorbieren von zumindest einer Fluidkomponente aus einem Trägerfluid verwendet wird, und beim Eintritt des Fluidgemisches unter die dachförmigen Verteilelemente zumindest eine dritte Fluidkomponente dem Gemisch beigemischt ist bzw. wird, die in der Fluidbehandlungszone mit mindestens einer der anderen anwesenden Komponenten reagiert.

Der erfindungsgemäße Anströmboden eignet sich also, wie weiter oben bereits erwähnt, besonders gut für den Einsatz bei solchen Verfahren, bei denen das zu behandelnde Fluid aufgrund einer besonders hohen Staubbelastung oder dergleichen oder aufgrund, von Fluidkomponenten, die - ebenso wie Staube - zu besonders starken Kontamina na - tionen des Schüttgutes in der Bodenschicht des Wanderbettreaktors unmittelbar oberhalb des Anströmbodens führen können. Ein besonders wichtiges Beispiel hierfür sind staubbelastete und/oder neben NOₓ auch SOₓ enthaltende Rauchgase aus Kraftwerksfeuerungsanlagen. Wenn zur NOₓ-Entfernung an dem Schüttgut ein Reduktionsmittel wie NH₃ eingesetzt wird und das Rauchgas beim Eintritt in der Wanderbettreaktor auch noch SOₓ enthält, werden nämlich beim erster Kontakt mit dem Schüttgut, was z. B. ein Aktivkoks sein kann, Ammoniumsulfat und andere Ammoniak-Schwefelverbindungen abgelagert. Dies kann insbesondere bei staubbelasteten Kraftwerksabgasen zu Verklebungen der Schüttgutpartikel im unmittelbaren Anströmbereich des Anströmbodens führen, was sowohl zur Behinderung des Schüttgutaustrages führen kann, als auch dazu, daß durch Staubablagerungen und Verklebungen eine unerwünschte Erhöhung des Druckverlustes in der Schüttung eintritt.

Wenn nun, gemäß einer alternativen Verfahrensweise der Erfindung, bei Verwendung eines derartigen Wanderbettreaktors das Schüttgut taktweise abgezogen wird und die während jedes Taktes abgezogene Schüttgutmenge der Menge der kontaminierten Bodenschicht des Schüttgutes entspricht, wird hierdurch vermieden, daß die kontaminierte Bodenschicht zu dick wird. Andererseits wird nur jeweils soviel Schüttgut abgezogen, wie es der vorerwähnte auf die Bodenschicht des Schüttgutes konzentrierte Kontaminationsvorgang erfordert. Dies ist vor allem dann von Vorteil, wenn die Standzeit des Schüttgutes im übrigen Wanderbettreaktor aufgrund der oberhalb des Anströmbodens allgemein geringeren Kontaminationsgefahr vergleichsweise groß ist, so daß ein kontinuierlicher Schüttgutabzug einen unnötigen und u. U. auch schlecht realisierbaren aufwand bedeuten wurde.

Gemäß einer weiteren alternativen Verfahrensweise der Erfindung wird vorgeschlagen, daß das Anströmfluid ein Gas oder ein Gasgemisch ist und der Wanderbettreaktor derart betrieben wird, daß der Taupunkt des Gases oder des Gasgemisches zumindest im unteren Horizontalbereich der Fluidbehandlungszone unterschritten oder zumindest gelegentlich erreicht wird. Eine derartige Fahrweise eines Wanderbettreaktors wurde in der Vergangenheit bewußt vermieden. Es war daher in bestimmter Fällen erforderlich, ein in einem anderen Verfahrensschritt, z. B. einem Naßwaschverfahren, vorbehandeltes Gas wieder aufzuheizen, bzw. zu trocknen bevor es in den Warderbettreaktor eingeleitet wurde. Eine Taupunktunterschreitung in der Schüttgutschicht des Wanderbettreaktors wurde vor allem dann unterbunden, wenn der Behandlungsprozeß ein Adsorbtionsprozeß war, denn durch Kondensatbildung werden die zu der Adsorbtionsplätzen führenden Poren des Adsorbtionsmittels, z. B. eines Aktivkokses, verlegt. Überraschenderweise sind derartige Kondensatbildungen bei Verwendung des erfindungsgemäßen Anströmbodens sogar in einigen Fällen vor besonderem Nutzen. Jedenfalls werden Verklebungen oder Verstopfungen des Schüttgutes im Bereich des Schüttgutaustrages bzw. des Fluidzutrittes vermieden bzw. ohne besonderen Eingriff in den Verfahrensablauf selbsttätig aufgelöst. Es hat sich ferner herausgestellt, daß die Gasbehandlung, insbesondere bei den Adsorbtionsprozessen nicht behindert wird, wenn das Kondensat nur im unteren Bereich der Schüttgutschicht, d. h. im unteren Horizontalbereich der Fluidbehandlungszone anfällt und demgemäß des Gas auf dem Weg nach oben durch die Schüttgutschicht weiter oben auf trockenes Schüttgut trifft. Es hat sich gezeigt, daß bei Taupunktsunterschreitungen des Gases innerhalb der Fluidbehandlungszone die Kondensatbildung im aller untersten Bereich am stärkster ins Gewicht fällt und nach oben hin abnimmt - sofern dar Taupunkt nicht in der gesamten Fluidbenandlungszone unterschritten wird. Die erfindungsgemäße Taupunktsunterschreitung und Kondensatbildung führt sogar zu einem willkommenen Spüleffekt auf der Oberflächen der Schüttgutpartikel, an deren Kondensat herunterläuft. Es ist sogar möglich, der Wanderbettreaktor wie einer Naßwäscher zu betreiben, wobei das in der Fluidbehandlungszone gebildete Kondensat als Waschflüssigkeit dient. Dann kann auf eine besondere Flüssigkeitsumwälzung durch die Fluidbehandlungszone vorteilhafterweise verzichtet werden.

Wenn in den oberen Horizontalbereichen der Fluidbehandlungszone der Taupunkt allerdings noch nicht unterschritten wird, so wird das zu behandelnde Gas mithin einer zweistufigen Reinigung nämlich einer Naß- und einer Trockenreinigung unterzogen, wobei das Gas in den unteren Horizontalbereichen zunächst naß und in der oberen Horizontalbereichen sodann trocken gereinigt wird, Beispielsweise sind in Rauchgasen neben SO₂ auch Halogene oder Halogenverbindungen, insbesondere Chlorverbindungen vorhanden, Das Chlor oder die Chlorverbindung wird an trockenen Adsorbtionsmitteln besonders leicht adsorbiert. Von diesen Adsorbtionsplätzen wird das Chlor bzw. die Chlorverbindung aber von adsorbiertem SO₂ wieder verdrängt. Die SO₂-Adsorbtionsfront schiebt also die Chlor-Adsorbtionsfront in Gasströmungsrichtung durch die Adsorbtionsmittelschicht vor sich her, so daß das Chlor oder Chlorverbindungen relativ frühzeitig am Ende der Adsorbtionsmittelschicht durchbrechen, d. h. im abströmenden Gas wieder enthalten sind. Wird nun der Wanderbettreaktor in den unteren Horizontalbereichen in der erfindungsgemäßen Weise als Naßreiniger und in den oberen Horizonalbereichen als Trockenreiniger betrieben, so werden das Chlor oder die Chlorverbindung die Zone der Trockenreinigung in aller Regel nicht mehr erreichen, weil sie in der Naßreinigungszone bereits an das Kondensat gebunden werden und mit dem Kondensat nach unten aus dem Wanderbettreaktor fortgespült werden.

Der Adsorber kann bewußt so gefahren werden, daß sich aufgrund der natürlichen Randbedingungen eine Taupunktunterschreitung einstellt. Eine Fahrweise mit fluidbenetztem Aktivkoks kann auch dadurch herbeigeführt werden, daß über an der oder innerhalb der Verteilelemente/n vorgesehene Rohre mit Zuteilöffnungen - gemäß Anspruch 14 oder 15 - Wasserdampf oder direkt eine Flüssigkeit eingedüst wird.

Ein weiterer Vorteil der erfindungsgemäßen Taupunktsunterschreitung liegt darin, daß in der Zone der Taupunktsunterschreitung Flugstäube, insbesondere Feinstäube und auch die in Verbindung mit diesen auftretenden Schwermetalle an die feuchten Schüttgutkörner nach Art eines "feuchten Schüttgutfilters" gebunden werden. Aus diesem Grunde eignen sich der erfindungsgemäße Anströmboden und die erfindungsgemäßen Verfahren zu dessen Betreiben, die sowohl für sich allein als auch in Kombination miteinander vorteilhaft angewendet werden können, auch für besonders schwierige Probleme wie die Fluidbehandlung hinter Sondermüllverbrennungsanlagen.

Der erfindungsgemäße Anströmboden ist aufgrund seiner besonderen Ausgestaltung also besser als bekannte Anströmböden in der Lage, eine gleichmäßige Schüttgutanströmung und einen planparallelen Schüttgutabzug auch bei solchen Verfahren zu gewährleisten, die bisher in einem, insbesondere einstufigen, Wanderbettreaktor nicht durchführbar waren.

Die vorgenannten erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen. Anwendungsgebiet bekannten Auswahlkriterien uneingeschränkt Anwendung finden können.

Weitere Einzelheizen, Merkmale und Vorteile des Erfindungsgegenstandes ergeben sich aus der nachfolgenden Beschreibung der Zeichnung, in der ein bevorzugter Anströmboden für Wanderbettreaktoren dargestellt worden ist. In der Zeichnung zeigen:
- Fig. 1: ein Anströmboden-Tragteil eines nicht gefüllten Wanderbettreaktors mit teilweise eingebautem Anströmboden (Schnitt entlang der Linie I-I gemäß Fig. 2);
- Fig. 2: vor demselben Wanderbettreaktor zwei schematische Vertikalschnittdarstellungen (Schnitte entlang den Linien IIa-IIa und IIb-IIb gemäß Fig. 1);
- Fig. 3: von demselben Wanderbettreaktor ein Anströmbodenmodul (Schüttgutabzugstrichter) in Ansicht von oben (Ansicht A gemäß Fig. 2);
- Fig. 4: von demselben Wanderbettreaktor eine detaillierte Schnittdarstellung (Vertikalschnitt) eines Anströmbodenmoduls (Schnitt entlang der Linie IV-IV gemäß Fig. 3);
- Fig. 5: eine alternative Ausführungsform eines Anströmbodens für Wanderbettreaktoren (rinnenförmiger Anströmboden) in Ansicht von oben (Ansicht B gemäß Fig. 6);
- Fig. 6: derselben Anströmboden in perspektivischer Darstellung (Vertikalschnitt entlang der Linie VI-VI gemäß Fig. 5);
- Fig. 7: eine weitere alternative Ausführungsform eines Anströmbodens für Wanderbettreaktoren mit einer zusätzlichen Beaufschlagungsvorrichtung für ein Behandlungsmedium.

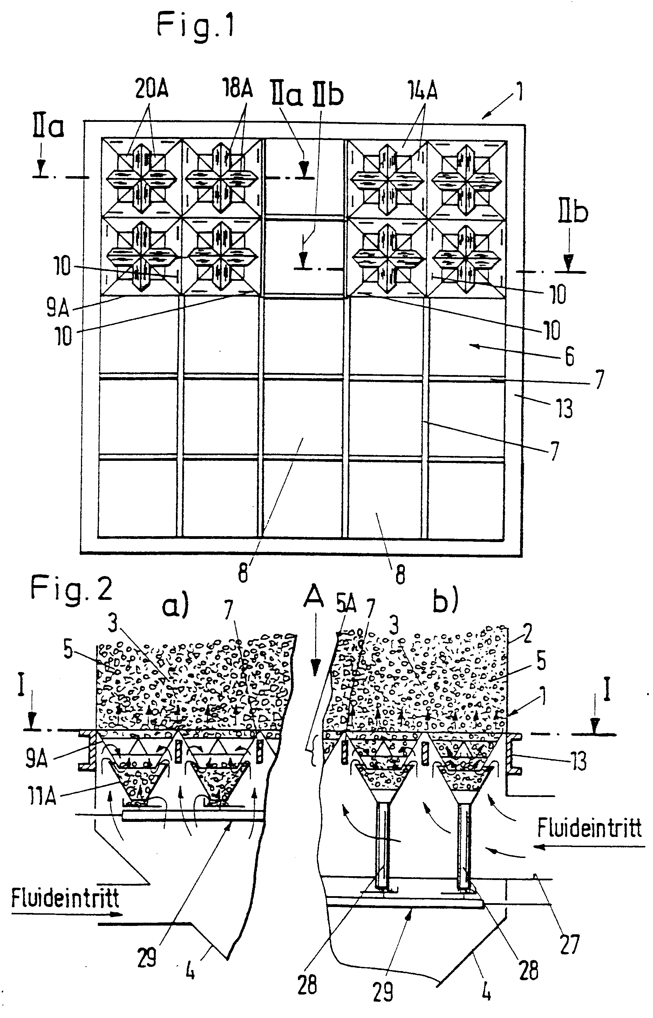

In den Fig. 1 und 2 ist die Einbausituation eines erfindungsgemäßen Anströmbodens 1 in einen Wanderbettreaktor 2 schematisch dargestellt. Der Wanderbettreaktor 2 weist in dem hier gewählten Ausführungsbeispiel einen quadratischen Querschnitt auf und weist zumindest im Bereich der Fluidbehandlungszone 3 senkrechte Wände auf, z. B. Metallblech auf. Unterhalb des Anströmbodens 1 weist der Wanderbettreaktor 2 einen vorzugsweise trichterförmigen Reaktorboden 4 auf.

Eine Aufgabevorrichtung für Schüttgut 5, z. B. Aktivkohle, und für den Abzug des Anströmfluides (von dem Schüttgut zu behandelndes oder das Schüttgut selbst behandelnde Fluid) sind in der Zeichnung nicht eigens dargestellt, da sie nicht den Gegensand der Erfindung bilden und im übrigen allgemein bekannt sind. Die Fluidbehandlungszone 3 besteht aus einer vorzugsweise über den gesamten Reaktorquerschnitt konstanthohen Schüttgutschicht.

Unterhalb der Fluidbehandlungszone 3 ist der Reaktor durch ein rasterförmiges Traggitter 6 aus z. B. gitterförmig zusammengesetzten Flacheisen 7 in gleichgroße Fluidanström- und Schüttgutabzugsfelder 8 flächendeckend unterteilt. Bevorzugt wird das Traggitter 6 von einem Traggitterrahmen 13 gehalten, an dem der Wanderbettreaktor abgestützt und die Reaktorseitenwände sowie deren Versteifungen befestigt werden können, wobei der Traggitterrahmen mit dem Traggitter als vorgefertigtes Bauelement ausgeführt sein kann.

Mit den Fluidanström- und Schüttgutabzugsfeldern 8 im Grundriß gleichgroße (erste) Schüttgutabzugstrichter 9A sind in das Traggitter 6 eingehängt. Hierzu dienen versetzt an den Schüttgutabzugstrichtern 9A angeordnete Auflagestücke 10.

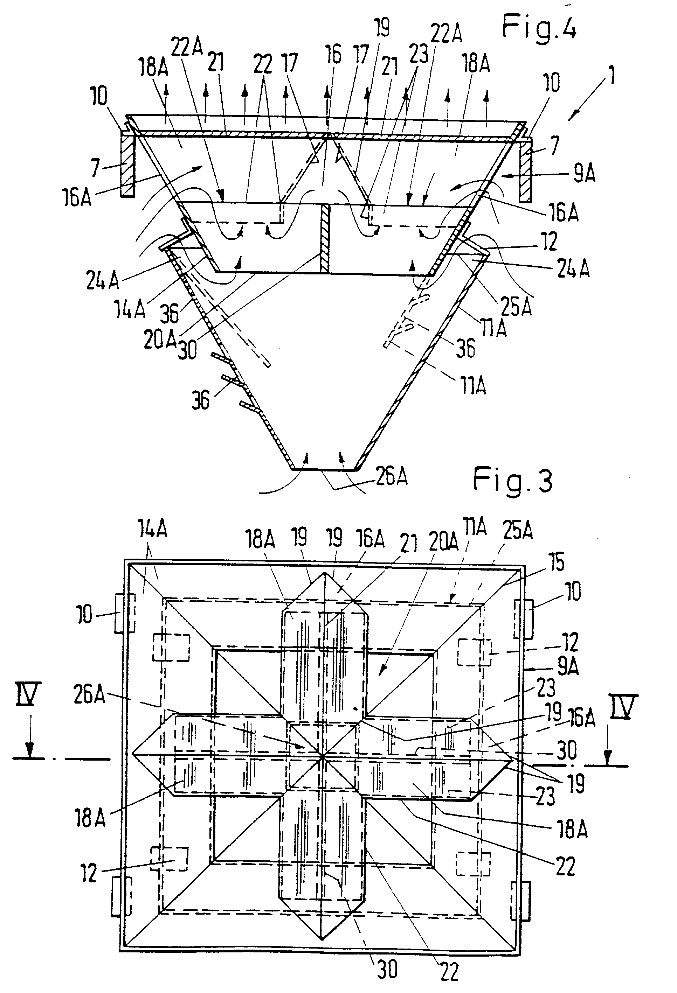

An die (ersten) Schüttgutabzugstrichter 9A sind (zweite) Schüttgutabzugstrichter 11A durch Befestigungslaschen 12 (Fig. 4)unten angehängt.

Die einzelnen, in ihrer Grundrißfläche z. B maximal 0,6 m Kantenlänge aufweisenden Schüttgutabzugstrichter 9A und 11A sind folgendermaßen aufgebaut:
Gemäß Fig. 3 und 4 weist der jeweils erste Schüttgutabzugstrichter 9A vier gleichgroße in sich ebene Seitenwände auf, die aus Metallblech bestehen und an den Kanten 15 miteinander verschweißt sind. Jede Seitenwand 14A weist in ihrer Mitte eine dreieckige Durchtrittsöffnung 16A für Behandlungsfluid auf. An die beiden oberen Öffnungsränder 17 der Durchtrittsöffnungen 16A schließen sich unten offene dachförmige Verteilelemente 18A trichterinnenseitig derart an, daß sie zum Trichterinneren hin von den Seitenwänden 14A abstehen. Die Verteilelemente 18A bestehen aus einfachen Winkelstücken aus Metallblech, deren Neigungswinkel (bezogen auf die Senkrechte) mit den Neigungswinkeln der Seitenwände 14A übereinstimmen. Die Verteilelemente 18A sind an ihren von den Seitenwänden 14A entfernten freien Enden entlang von Berührungskanten 19 miteinander durch Schweißnähte verbunden. Dadurch sowie die mittige Anordnung der Durchtrittsöffnungen 16A an den Seitenwänden 14A befindet sich der Verbindungsbereich der Verteilelemente 18A in dem Bereich oberhalb der Schüttgutaustrittsmündungen 20A und 36A des ersten und des zweiten Schüttgutabzugstrichters 9A und 11A.

Die Firste 21 der dachförmigen Verteilelemente 18 bilden also ein rechtwinkliges Kreuz und sind bevorzugt in einer gemeinsamen Ebene angeordnet.

An die unteren Kanten 22 der Verteilelemente 18A, die mit den Seitenwänden 14A Schüttgutdurchtrittsöffnungen 22A bilden, schließen sich senkrecht angeordnete kurze Schürzen 23 aus Metallblech an, welche bin Überquellen der Schüttgutpartikel in die Durchtrittsöffnungen 16A verhindern.

Unterhalb jedes ersten Schüttgutabzugstrichters 9A ist ein zweiter Schüttgutabzugstrichter 11A unter Bildung eines Fluiddurchtrittsspaltes 24A mittels Befestigungslaschen 12 hängend angeordnet. Die Neigung der ebenfalls vier in sich ebenen Seitenwände des zweiten Schüttgutabzugstrichters 11A ist gleich den Neigungswinkeln der ersten Schüttgutabzugstrichter 9A, also z. B. etwa 20°, sie kann aber auch um z. B. 10° flacher (bezogen auf die Vertikale) sein, um die Bauhöhe der Trichtermodule möglichst klein zu halten - und zwar praktisch ohne negativen Einfluß auf die Planparallelität des Schüttgutabzuges aus der Fluidbehandlungszone; letzteres ist in Fig. 4 in der linken Figurenhälfte gestrichelt dargestellt.

Der erste Schüttgutabzugstrichter 9A ragt in den zweiten Schüttgutabzugstrichter 11A ein Stück hinein. Dadurch ist die Schüttgutaustrittsöffnung 20A des ersten Schüttgutabzugstrichters 9A tiefer als die Eintrittsöffnung 25A des zweiten Schüttgutabzugstrichters 11A angeordnet. Die dadurch bedingte Überlappung der ersten und zweiten Trichterseitenwände verhindert ein Überquellen des Schüttgutes in diesem Bereich. Das Schüttgut wird mithin ausschließlich an der Schüttgutaustrittsmündung 26A des zweiten Schüttgutabzugstrichters 11A abgezogen. Durch diese Schüttgutabzugsmündung 26A kann gewünschtenfals auch eine kleine Teilmenge des Anströmfluides zuströmen (siehe Fig. 2 - Ausführungsform (a)). Eine Zuströmung von Anströmfluid durch die Schüttgutaustrittsmündung 26A kann aber auch verhindert werden, wie in Fig. 2 in Ausführungsform (b) dargestellt ist. Im letzteren Fall ist unterhalb des Fluideintrittes ein Boden 27 im Wanderbettreaktor 2 angeordnet, durch den Schüttgutabzugsrohre 28 fluiödicht geführt sind. In jedem Fall sind Schüttgutabsperr/Fördereinrichtungen 29 unterhalb der Schüttgutaustrittsmündungen 26A angeordnet.

Vertikal angeordnete Schüttgutscheidewände 30 sind unterhalb der Verteilelemente 18A im Bedarfsfall vorgesehen und an den Seitenwänden 14A des ersten Schüttgutabzugstrichters 9A durch Schweißen befestigt.

Die von den Verteilelementen 18A nicht abgedeckte Querschnittsfläche des ersten Schüttgutabzugstrichters 9A bildet etwa im Bereich der Schürzen 23 den Fluidanströmquerschnitt jedes Trichtermoduls in die Fluidbehandlungszone 3. Dieser sollte (bezogen auf die Grundrißfläche jedes Trichtermoduls) möglichst groß sein.

Der erste Kontakt zwischen dem Anströmfluid und den Schüttgutpartikeln findet einerseits unterhalb der Verteilelemente 18A und andererseits im Fluiddurchtrittsspalt 24A zwischen den beiden ersten und zweiten Schüttgutabzugstrichtern 9A und 11A statt Die Eintrittsfläche der Fluiddurchtrittsspalte eines Trichtermoduls sollte vorzugsweise gleichgroß wie der vorerwähnte Fluidanströmquerschnitt für die Fluidbehandlungszone sein; zumindest sollte das Flächenverhältnis zwischen 3:1 bis 1:3 betragen.

Wie aus Fig. 4 weiterhin ersichtlich - gemäß gestrichelter Darstellung in der rechten Bildhälfte - kann der zweite Schüttgutabzugstrichter 11A auch einstückig mit dem ersten Schüttgutabzugstrichter 9A gebildet sein, indem er unterhalb der Verteilelemente 18A eine Fortsetzung des ersten Schüttgutabzugstrichters 9A nach unten bildet. Darüber hinaus können weitere Durchbrechungen 36 in den Wandungen des Schüttgutabzugstrichters in diesem Bereich, also im Bereich des zweiten Schüttgutabzugstrichters, angeordnet sein; dies ist in Fig. 4 in der rechten Bildhälfte gestrichelt und in der linken Bildhälfte mit ausgezogenen Linien dargestellt. Diese fluiddurchlässigen Durchbrechungen können im Querschnitt runde, quadratische oder längliche Formen haben, also auch schlitzförmig sein, z. B. unter Verwendung gesickter Bleche. Derartige Durchbrechungen sind immer dann möglich, wenn das zu behandelnde Fluid weder mit hohen Partikelfrachten belastet ist, noch in anderer Weise zu Verstopfungen des Wanderbettreaktors, insbesondere innerhalb der Bodenschicht 5A der Schüttgutpartikel (Fig. 2), also im Bereich des Anströmbodens selbst, führen kann.

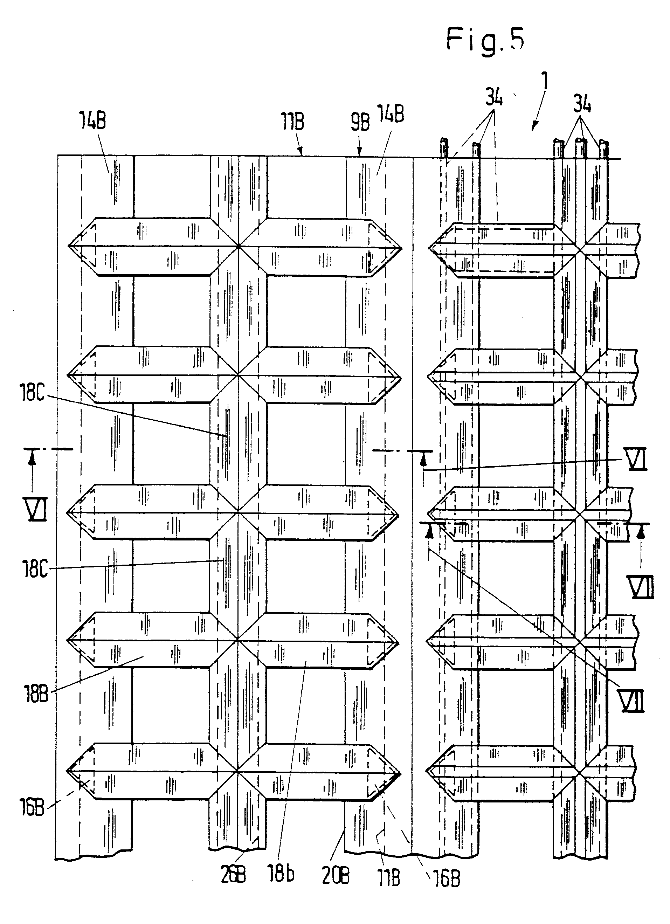

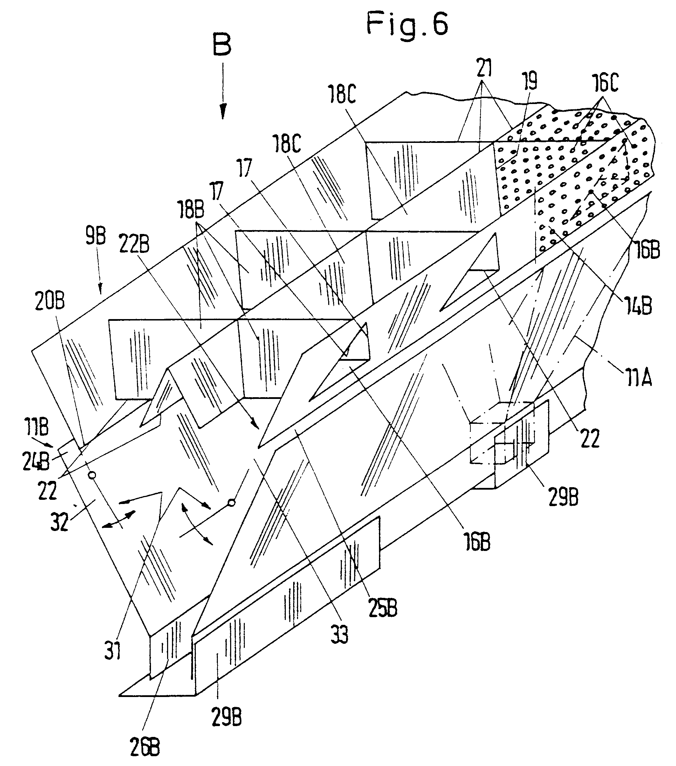

Die Ausführungsform gemäß Fig. 5 und 6 zeigt eine rinnenförmige Anordnung des Anströmbodens, bestehend aus einer ersten Schüttgutabzugsrinne 9B und einer zweiten Schüttgutabzugsrinne 11B. Die erste Schüttgutabzugsrinne 9B weist (sinnentsprechend dem Ausführungsbeispiel in Fig. 1 bis 4) trichterförmig nach unten zusammenlaufende Seitenwände 14B mit darin vorgesehenen Durchtrittsöffnungen 16B für das zu behandelnde Fluid auf. Einander gegenüberliegende Seitenwände 14B einer ersten Schüttgutabzugsrinne 9B sind durch dachförmige Verteilelemente 18B miteinander verbunden. Seitlich benachbarte Verteilelemente 18B sind in der Rinnenmitte durch ein weiteres Verteilelement 18C mechanisch und im Sinne einer Fluidverteilung und Kernflußverhinderung miteinander verbunden. Die Verteilelemente 18B und 18C weisen untere Kanten 22 auf, die mit den Seitenwänden 14B jeder Schüttgutabzugsrinne 9B Schüttgutdurchtrittsöffnungen 22B bilden (Fig. 6).

Auch bei dieser Ausführungsform mündet eine Schüttgutaustrittsmündung 20B der ersten Schüttgutabzugsrinne 9B unter Bildung eines Fluiddurchtrittsspaltes 24B unterhalb der Eintrittsöffnung 25B der zweiten Schüttgutabzugsrinne 11B, welcher wiederum eine Schüttgutaustrittsmündung 26B aufweist, die unterhalb des Verteilelementes 18C in einer Schüttgutabsperr-Einrichtung 29B mündet. Zur Verbesserung der Fluidverteilung im Windkasten des Anströmbodens können anstelle der zweiten Schüttgutabzugsrinnen 11B auch zweite Schüttgutabzugstrichter 11A vorgesehen sein; dies ist in Fig. 6 strichpunktiert dargestellt.

Wie in Fig, 6 dargestellt, können Schüttgutleitflächen 31 innerhalb, insbesondere unterhalb, des Querschnittes der Schüttgutaustrittsmündung 20B angeordnet sein. Derartige Schüttgutleitbleche sind natürlich auch bei der Ausführungsform gemäß Fig. 1 bis 4 einsetzbar, bei der rinnenförmigen Ausführungsform gemäß Fig. 6 aber einfacher realisierbar. Diese Schüttgutleitflächen 31 können insgesamt (Fig. 6, linke Bildhälfte) oder im Bereich einer Teilfläche (Fig. 6, rechte Bildhälfte) schwenkbar sein und somit den zentralen Bereich der Schüttgutaustrittsmündung 20B der ersten Schüttgutabzugsrinne 9B mehr oder weniger stark einengen. Je flacher die Neigung der Schüttgutleitflächen 31 ist (bezüglich der Horizontalen), um so mehr öffnet sich der zwischen den Schüttgutleitflächen 31 und der zweiten Schüttgutabzugsrinne 11A gebildete Spalt 32 in Richtung auf die Schüttgutaustrittsmündung 26B der zweiten Schüttgutabzugsrinne 11B.

Die Schüttgutleitflächen 31 können, insbesondere wenn sie insgesamt schwenkbar sind, auch unmittelbar an die erste Schüttgutabzugsrinne 9B anschließen; dies ist in Fig. 6 in der linken Bildhälfte gestrichelt dargestellt. Das Größerwerden des Spaltes 32 nach unten hin bewirkt in jedem Fall eine Erleichterung des Schüttgutabzuges aus dem Fluiddurchtrittsspalt 24B bzw. dessen von dem Spalt 32 gebildeten unteren Ende. Ein taktweise vorgenommenes Verschwenken der Schüttgutleitfläche 31 nach innen hin fördert diesen Schüttgutaustausch. Der Schüttgutaustausch im Bereich des Fluiddurchtrittspaltes 25B kann aber auch permanent verbessert werden, indem zwischen der Schüttgutleitfläche 31 und der Schüttgutaustrittsmündung 20B der ersten Schüttgutabzugsrinne 9B ein Schüttgut- und Fluid-Durchtrittsspalt 33 vorgesehen ist (Fig. 6, rechte Figurenhälfte). Durch diesen Spalt können die Schüttgutpartikel nämlich relativ leicht in den Spalt 32 zwischen der zweiten Schüttgutabzugsrinne 11B und der Schüttgutleitfläche 31 abwandern. Diese Schüttgutpartikelbewegung fördert den Schüttgutaustausch im Bereich des Fluiddurchtrittsspaltes 24B.

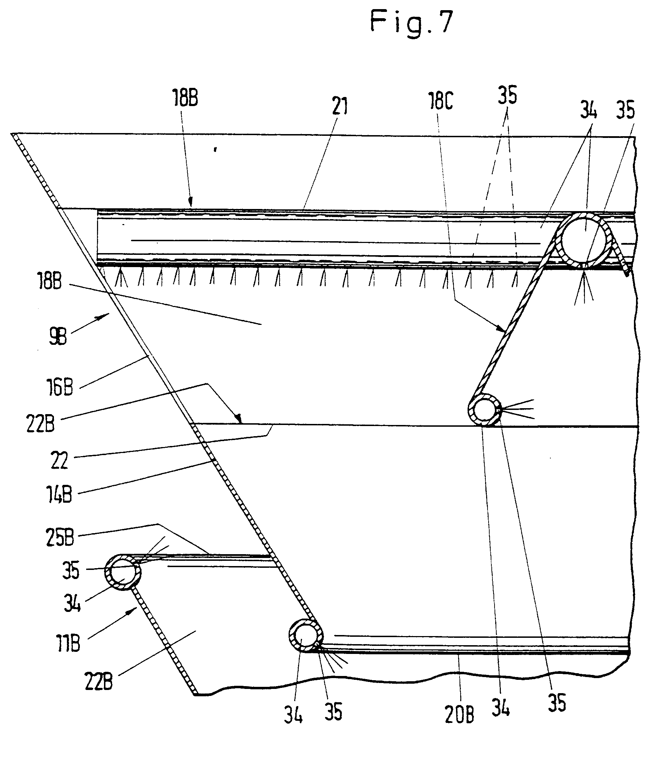

In Fig. 6 sind in der äußersten rechten obersten Bildhälfte rechts neben der strichdoppelpunktierten Linie weitere alternative Ausführungsformen der Erfindung hinsichtlich des Fluideintrittes in die Fluidbehandlungszone dargestellt, die selbstverständlich auch bei den übrigen Ausführungsformen realisiert werden können. Diese Alternativen betreffen einerseits die Verwendung von Lochblechen für die Rinnenseitenwände 14B (bzw. die Trichterseitenwände 14A im Falle von trichterförmigen Schüttgutabzugselementen) und/oder für die dachförmigen Verteilelemente 18B und/oder 18C (bzw. 18A bei trichterförmigen Schüttgutabzugselementen). Derartige Lochbleche können alternativ oder - wie bevorzugt - kumulativ zu den bereits erläuterten Durchtrittsöffnungen 16B verwendet werden. Die Durchtrittsöffnung 16B ist im oberen rechten Bereich der Fig. 6 lediglich gestrichelt dargestellt, um die alternative Verwendungsart verschiedener Durchtrittsöffnungen zu veranschaulichen. Die Löcher der Lochbleche werden in der Figur allgemein als Durchtrittsöffnungen 16C bezeichnet. Die Verwendung der Lochbleche mit Durchtrittsöffnungen 16C ist dazu geeignet, die Fluideintrittsgeschwindigkeit im Bereich des Anströmbodens zu reduzieren. - Andererseits kann aber auch auf die Durchtrittsöffnungen 16A bzw. 16B und 16C völlig verzichtet werden, wenn auf andere Weise sichergestellt wird, daß das Anströmfluid zumindest im Bereich der Schüttgutaustrittsmündungen 20A bzw. 20B sowie im Bereich der unteren Kanten 22 in die Fluidbehandlungszone eintreten kann. Eine derartige Zuführung des Anströmfluids kann z. B. mittels Rohren 34 mit Zuteilöffnungen 35 erfolgen, wie sie unter Bezugnahme auf Fig. 7 nachfolgend im Zusammenhang mit der Verwendung für zusätzliche Fluide beschrieben werden.

Die erfindungsgemäßen Bauteile sind also in einem außerordentlich großen Umfang im Rahmen der Erfindung miteinander kombinierbar - was auch für die verschiedenen erfindungsgemäßen Möglichkeiten gilt, einen erfindungsgemäßen Wanderbettreaktor zu betreiben.

Aus Fig. 7, sowie Fig. 5, rechte Figurenhälfte, ergibt sich, daß an verschiedenen Stellen des Anströmbodens 1 Rohre 34 oder ähnliche Verteilelemente für, Behandlungsmedien oder dergleichen angeordnet sein können, die mit Zuteilöffnungen 35 versehen sind, durch welche ein solches Behandlungsmedium dem zu behandelnden Fluid unmittelbar vor dessen Eintritt in das Schüttgut zugeführt werden kann. Z. B. kann hierdurch NH₃ einem NOₓ - und gegebenenfalls zusätzlich auch noch SOₓ - beladenen Feuerungsrauchgas beigemischt werden - wie weiter oben beschrieben.

Derartige Rohre versteifen den Anströmboden 1 in vorteilhafter Weise und schaffen im Bereich von Kanten, an denen sie bevorzugt angeordnet sind, abgerundete und damit günstige Querschnitte. Bevorzugt sind diese Rohre 34 im Bereich der Firste 21 und unteren Kanten 22 der durchgehenden Verteilelemente 18C, aber auch im Bereich insbesondere der Firste der Verteilelemente 18B (oder 18A) angeordnet. Weiterhin empfiehlt sich die Anordnung solcher Rohre 34 im Bereich der Schüttgutaustrittsmündung der ersten Schüttgutabzugstrichter/-rinnen und im Bereich der Eintrittsöffnungen der zweiten Schüttgutabzugstrichter/-rinnen. Solche Rohre können, wie in Fig. 7 links oben dargestellt, auch tot enden. Die Zuteilöffnungen 35 sind vorzugsweise so angeordnet, daß sie nicht im Schüttgut liegen oder zumindest vom Schüttgut nicht ohne weiteres versperrt werden können.

Ein solcher Anströmboden ist z. B. auch für die Anwendung in einem mehrstufigen Wanderbettreaktor geeignet, bei dem mehrere erfindungsgemäße Anströmböden übereinander angeordnet sind und bei dem die Schüttgutaustrittsmündungen des jeweils höheren Anströmbodens bzw. an diese Austrittsmündungen angesetzte Rohre oder Schächte als Schüttgutzuteilelemente für das darunter liegende Teilbett des Wanderbettreaktors dienen. Das Schüttgut durchwandert dann alle Teilbetten von oben nach unten. Ebenso kann das (zu behandelnde) Anströmfluid diese Teilbetten von unten nach oben durchströmen. Jedes Teilbett kann aber auch von einem separaten Anströmfluid durchströmt werden; hierzu ist es dann erforderlich, die erwähnten Schüttgutzuteilelemente durch einen ansonsten geschlossenen Zwischenboden des Wanderbettreaktors zu führen und unterhalb dieses (dieser) Zwischenbodens/böden einen Fluidaustritt und für den darüber liegenden Anströmboden einen eigenen Fluidzutritt vorzusehen. - Die Windkästen unter den Anströmböden, die Fluidabströmräume oberhalb der Teilbetten, sowie die gegenseitige Zuordnung der Schüttgutzuteilelemente zu den darunter liegenden Schüttgutabzugsöffnungen der Teilbetten können in ähnlicher Weise vorgesehen sein, wie in der WO 87/00768.

### Bezugszeichenliste:

- 1: Anströmboden
- 2: Wanderbettreaktor
- 3: Fluidbehandlungszone
- 4: Reaktorboden
- 5: Schüttgut
- 5A: Bodenschicht
- 6: Traggitter
- 7: Flacheisen
- 8: Fluidanström- und Schüttgutabzugsfelder
- 9A: erste Schüttgutabzugstrichter
- 9B: erste Schüttgutabzugsrinnen
- 10: Auflagestücke
- 11A: zweite Schüttgutabzugstrichter
- 11B: zweite Schüttgutabzugsrinnen
- 12: Befestigungslaschen
- 13: Traggitterrahmen
- 14A: Seitenwände
- 14B: Seitenwände
- 15: Kanten
- 16A: Durchtrittsöffnungen
- 16B: Durchtrittsöffnungen
- 16C: Durchtrittsöffnungen
- 17: Öffnungsränder
- 18A: Verteilelemente
- 18B: Verteilelemente
- 18C: Verteilelemente
- 19: Berührungskanten
- 20A: Schüttgutaustrittsmündung
- 20B: Schüttgutaustrittsmündung
- 21: Firste
- 22: untere Kanten
- 22A: Schüttgutdurchtrittsöffnungen
- 22B: Schüttgutdurchtrittsöffnungen
- 23: Schürzen
- 24A: Flüiddurchtrittsspalt
- 24B: Flüiddurchtrittsspalt
- 25A: Eintrittsöffnung
- 25B: Eintrittsöffnung
- 26A: Schüttgutaustrittsmündung
- 26B: Schüctgutaustrittsmündung
- 27: Boden
- 28: Schüttgutabzugsrohre
- 29: Schüttgutabsperr/Förder-Einrichtungen
- 29B: Schüttgutabsperr-Einrichtung
- 30: Schüttgutscheidewände
- 31: Schüttgutleitflächen
- 32: Spalt
- 33: Schüttgut- und Fluid-Durchcrittsspalt
- 34: Rohre
- 35: Zuteilöffnung
- 36: Durchbrechungen
- A: Ansicht
- B: Ansicht

## Patentansprüche

1. Anströmboden für Wanderbettreaktoren, bestehend
aus zumindest nebeneinander anzuordnenden oder angeordneten ersten Schüttgutabzugstrichtern (9A) oder aus zumindest einer ersten trichterförmigen Schüttgutabzugsrinne (9B) bei dem
in den Seitenwänden (14A bzw. 14B) jedes Trichters bzw. jeder Rinne Durchtrittsöffnungen (16A bzw. 16B) für Anstromfluid angeordnet und über den Trichterumfang bzw. entlang der Rinne verteilt sind, und
oberhalb jeder Durchtrittsöffnung (16A bzw. 16B) ein unten offenes, dachförmiges Verteilelement (18A bzw. 18B) für Anströmfluid trichterinnenseitig bzw. rinneninnenseitig von der Seitenwand (14A bzw. 14B) zum Trichterinneren bzw. Rinneninneren hin absteht.

2. Anströmboden nach Anspruch 1, dadurch gekennzeichnet, daß die Verteilelemente (18A bzw. 18B) miteinander verbunden sind, vorzugsweise oberhalb der Schüttgutaustrittsmündung (20A bzw. 20B) des ersten Schüttgutabzugstrichters (9A) bzw. der ersten Schüttgutabzugsrinne (9B).

3. Anströmboden nach Anspruch 2, dadurch gekennzeichnet, daß insbesondere bei einer rinnenförmigen Ausgestaltung, weitere dachformige Verteilelemente (18C) vorgesehen sind, welche im Winkel zu den übrigen Verteilelementen (18A bzw. 18B) angeordnet und mit diesen im Sinne einer weiteren Fluidverteilung verbunden sind.

4. Anströmboden für Wanderbettreaktoren mit einer Verteileinrichtung für Anströmfluid, bei dem
a) der Anströmboden aus zumindest nebeneinander anzuordnenden oder angeordneten Schüttgutabzugstrichtern (9A oder 9A und 11A) oder aus zumindest einer trichterförmigen Schüttgutabzugsrinne (9B oder 9B und 11B) besteht,
b) die Schüttgutabzugstrichter (9A oder 9A und 11A) oder die Schüttgutabzugsrinnen (9B oder 9B und 11B) mit Schüttgutaustrittsmündungen (26A bzw. 26B) unmittelbar oder mittelbar versehen sind.
c) innerhalb jedes Schüttgutabzugstrichters (9A oder 9A und 11A) oder innerhalb jeder Schüttgutabzugsrinne (9B oder 9B und 11B) dachförmige Verteilelemente (18A, 18B, 18C) oberhalb jeder Schüttgutaustrittsmündung (26A bzw. 26B) derart angeordnet sind, daß sie zumindest den zentralen, vorzugsweise den gesamten, Flächenbereich der Schüttgutaustrittsmündung (26A bzw. 26B) dachähnlich überdecken, und
d) die Verteilelemente (18A, 18B, 18C) untere Kanten (22) aufweisen, die mit den Seitenwänden (14A bzw. 14B) jedes (ersten) Schüttgutabzugstrichters (9a) oder jeder (ersten) Schüttgutabzugsrinne (9B) Schüttgutdurchtrittsöffnungen (22A bzw. 22B), vorzugsweise in einer einzigen Horizontalebene bilden, und bei dem
e) die Verteilelemente (18A, 18B, 18C) trichterinnenseitig bzw. rinneninnenseitig von den Seitenwänden (14A bzw. 14B) zum Trichterinneren bzw. zum Rinneninneren hin abstehen und über den Trichterumfang bzw. entlang der Rinne verteilt angeordnet sind.

5. Anströmboden nach einem der Ansprüche 1 bis 4, dadurch gekennzeichnet, daß sich an die unteren Kanten (22) der Verteilelemente (18A; 18B; 18C) etwa senkrecht angeordnete Schürzen (23) anschließen.

6. Anströmboden nach einem der Ansprüche 1 bis 5, dadurch gekennzeichnet, daß unterhalb jedes ersten Schüttgutabzugtrichters (9A) bzw. jeder ersten Schüttgutabzugsrinne (9B) mindestens ein zweiter Schüttgutabzugstrichter (11A) bzw. eine zweite Schüttgutabzugsrinne (11B) angeordnet ist und einen Fluiddurchtrittsspalt (24A bzw. 24B) bilden, oder fluiddurchlässige Wandflächen aufweist, oder beides.

7. Anströmboden nach Anspruch 6, dadurch gekennzeichnet, daß die Schüttgutaustrittsmündung (20A bzw. 20B) des ersten Schüttgutabzugstrichters (9A) bzw. der ersten Schüttgutabzugsrinne (9B) tiefer als die Eintrittsöffnung (25A bzw. 25B) des zweiten Schüttgutabzugstrichters (11A) bzw. der zweiten Schüttgutabzugsrinne (11B) angeordnet ist.

8. Anströmboden nach einem dar Ansprüche 1 bis 7, gekennzeichnet durch vertikal und unterhalb der Verteilelemente (18A bzw. 18) angeordnete Schüttgutscheidewände (30).

9. Anströmboden nach einem der Ansprüche 1 bis 8, gekennzeichnet durch ein rasterförmiges Traggitter (6) zur Aufnahme fertig montierte Module bildender Schüttgutabzugstrichter (9A, 11A).

10. Anströmboden nach Anspruch 9, gekennzeichnet durch einen das Traggitter (6) haltenden Traggitterrahmen (13).

11. Anströmboden nach einem der Ansprüche 6 bis 10, gekennzeichnet durch Schüttgutleitflächen (31) die bezüglich der Schüttgutwanderrichtung innerhalb des Querschnittes der Schuttgutaustrittsmundung (20A bzw. 20B) des ersten Schüttguttrichters (9A) bzw. der ersten Schüttgutabzugsrinne (9B) angeordnet sind.

12. Anströmboden nach Anspruch 11, dadurch gekennzeichnet, daß die Schüttgutleitflächen (31) einen nach unten sich erweiternden Spalt (32) mit je einer Wandfläche des zweiten Schüttgutabzugstrichters (11A) bzw. der zweiten Schüttgutabzugsrinne (11B) bilden.

13. Anströmboden nach Anspruch 11 oder 12, dadurch gekennzeichnet, daß die Schüttgutleitflächen (31) zumindest partiell bewegbar sind.

14. Anströmboden nach einem der Ansprüche 11 bis 13, dadurch gekennzeichnet, daß die Schüttgutleitflächen (31) mit der Schüttgutaustrittsmündung (20B) einen Schüttgut- und Fluid-Durchtrittsspalt (33) bilden.

15. Anströmboden nach einem der Ansprüche 1 bis 14, dadurch gekennzeichnet, daß an den oder innerhalb der Verteilungselemente(n) (18A; 18B; 18C) und/oder Schüttgutabzugstrichter(n) oder -rinnen (9A; 9B; 11A; 11B) Rohre (34) oder dergleichen mit Zuteilöffnungen (35) zur Beaufschlagung des zu behandelnden Fluides mit einem Behandlungsmedium angeordnet sind.

16. Anströmboden nach Anspruch 15, dadurch gekennzeichnet, daß das Rohr (34) den First und/oder zumindest eine Kante des Verteilelementes (18A; 18B; 18C) und/oder der Schüttgutabzugstrichter oder -rinnen (9A; 9B; 11A; 11B) bildet oder sich entlang dessen erstreckt.

17. Anströmboden nach einem der Ansprüche 1 bis 16, dadurch gekennzeichnet, daß die Dachneigungswinkel der Verteilelemente (18A bzw. 18B) den Seitenwandneigungswinkeln des ersten Schüttgutabzugstrichters bzw. der ersten Schüttgutabzugsrinne entsprechen und, vorzugweise, kleiner oder gleich dem Reibungswinkel des Schüttgutes mit der betreffenden Wandfläche sind.

18. Anströmboden nach einem dem Ansprüche 1 bis 17, dadurch gekennzeichnet, daß, die Breite der (ersten) Schüttgutabzugstrichter oder -rinnen (9A oder 9B) oder der Mittenabstand benachbarter (erster) Schüttgutabzugstrichter oder -rinnen (9A oder 9B) 100 mm bis 2000 mm, vorzugsweise 300 mm bis 800 mm, beträgt.

19. Anströmboden nach einem der Ansprüche 1 bis 18, gekennzeichnet durch Durchtrittsöffnungen (16C) für Anströmfluid in denjenigen Bereichen der Seitenwände (14A oder 14B) der (ersten) Schüttgutabzugstrichter oder -rinnen (9A oder 9B), welche mit dem Schüttgut (5) in Berührung stehen.

20. Anströmboden nach einem der Ansprüche 1 bis 19, dadurch gekennzeichnet, daß die Verteilelemente (18A bzw. 18B) zumindest im Bereich der Anschlußkanten der Dachflächen mit den Trichter- oder Rinnenwänden dicht verbunden sind.

21. Anströmboden nach einem der Ansprüche 1 bis 20, dadurch gekennzeichnet, daß die unteren Kanten der Verteilelemente (18A bzw. 18B) von dem Anströmfluid umströmbar sind.

22. Wanderbettreaktor mit einem ersten Anströmboden nach einem der Ansprüche 1 bis 21, gekennzeichnet durch einen zweiten oder weitere Anströmböden nach einem der Ansprüche 1 bis 21, welcher/welche über oder unter dem ersten Anströmboden angeordnet ist/sind.

23. Verfahren zum Betreiben eines Anströmbodens für Wanderbettreaktoren nach einem der Ansprüche 1 bis 22,
dadurch gekennzeichnet, daß bei Verwendung eines derartigen Wanderbettreaktors als Schüttgut ein Adsorbtionsmittel zum Adsorbieren von zumindest einer Fluidkomponente aus einem Trägerfluid verwendet wird und beim Eintritt des Fluidgemisches unter die dachförmigen Verteilelemente zumindest eine dritte Fluidkomponente dem Fluidgemisch beigemischt wird oder ist, die in der Fluidbehandlungszone mit mindestens einer der anderen answesenden Komponenten reagiert.

24. Verfahren nach Anspruch 23, dadurch gekennzeichnet, daß das Tragerfluid ein Verbrennungsrauchgas ist, die an dem Schüttgut zu adsorbierende Komponente aus SOₓ und NOₓ besteht und die dritte Fluidkomponente ein Reduktionsmittel, insbesondere NH₃, ist.

25. Verfahren zur Betreiben eines Anströmbodens für Wanderbettreaktoren nach einem der Ansprüche 1 bis 22, insbesondere nach Anspruch 23 oder 24,
dadurch gekennzeichnet, daß bei Verwendung eines derartigen Wanderbettreaktors das Schüttgut taktweise abgezogen wird und ggf. die während eines Taktes abgezogene Schüttgutmenge der Menge der kontaminierten Bodenschicht des Schüttgutes entspricht.

26. Verfahren nach einem der Ansprüche 23 bis 25, dadurch gekennzeichnet, daß sowohl das Schuttgut als auch das zu behandelnde Anströmfluid durch einen zweistufigen Wanderbettreaktor geführt werden, bei dem jede Stufe einen der Anströmböden aufweist und die Anströmböden derart übereinander angeordnet sind, daß die Schüttgutaustrittsmündungen oder rohr- oder schachtförmige Ansätze an dieselben als Schüttgutzuteilelemente für das untere Wanderbett dienen und das von dem unteren Wanderbett abströmende Fluid dem oberen Anströmboden als Anströmfluid mittelbar oder unmittelbar zugeführt wird.

27. Verfahren zum Betreiben eines Wanderbettreaktors nach einem der Ansprüche 1 bis 22, insbesondere nach einem der Ansprüche 23 bis 26,
dadurch gekennzeichnet, daß bei Verwendung eines derartigen Wanderbettreaktors das Anströmfluid ein Gas oder ein Gasgemisch ist und der Wanderbettreaktor derart betrieben wird, daß der Taupunkt des Gases oder des Gasgemisches zumindest im unteren Horizontalbereich der Fluidbehandlungszone unterschritten wird.

28. Verfahren zum Behandeln von Fluiden an Schüttgütern in mindestens einem Wanderbettreaktor mit mindestens einem Anströmboden, dadurch gekennzeichnet, daß als Anströmboden mindestens ein Anströmboden nach einem der Ansprüche 1 bis 22 verwendet wird.

29. Verfahren nach Anspruch 26, dadurch gekennzeichnet, daß in demselben Wanderbettreaktor mehrere übereinander angeordnete Anströmböden nach einem oder mehreren der Ansprüche 1 bis 22 unter Ausbildung von mehreren Wanderbetten verwendet werden.

30. Verfahren nach Anspruch 28 oder 29, dadurch gekennzeichnet, daß in zumindest einem der Wanderbetten das Fluid und das Schüttgut im Gegenstrom zueinander geführt werden.

31. Verfahren nach einem der Ansprüche 28 bis 30, dadurch gekennzeichnet, daß das Fluid zumindest teilweise im Bereich der unterhalb der Verteilelemente sich als freie Anstromflächen ausbildenden Schüttgutoberflächen dem Schüttgut zugeführt wird.

## Claims

1. Inlet floor for moving bed reactors comprising at least first discharge hoppers (9A) for granular material which are to be arranged or are arranged adjacent to one another or comprising at least one first hopper-shaped discharge chute (9B) for granular material, in which openings (16A or 16B respectively) for inlet fluid are arranged in the side walls (14A or 14B respectively) of each hopper or each chute and are distributed over the periphery of the hopper or along the chute, and above each opening (16A or 16B respectively) a downwardly open roof-shaped distributor element (18A or 18B respectively) for inlet fluid projects from the side wall (14A or 14B respectively) on the inside of the hopper or the inside of the chute respectively towards the interior of the hopper or of the chute respectively.

2. Inlet floor according to Claim 1, characterized in that the distributor elements (18A or 18B) are connected to one another, preferably above the granular material outlet port (20A or 20B respectively) of the first granular material discharge hopper (9A) or of the first granular material discharge chute (9B).

3. Inlet floor according to Claim 2, characterized in that, particularly in the case of a chute-shaped construction, further roof-shaped distributor elements (18C) are provided which are arranged at an angle to the other distributor elements (18A or 18B) and are connected to the latter for the purpose of a further fluid distribution.

4. Inlet floor for moving bed reactors with a distributor arrangement for inlet fluid in which
a) the inlet floor comprises at least discharge hoppers (9A or 9A and 11A) which are to be arranged or are arranged adjacent to one another or comprises at least one hopper-shaped discharge chute for granular material (9B or 9B and 11B),
b) the granular material discharge hoppers (9A or 9A and 11A) or the granular material discharge chutes (9B or 9B and 11B) are provided directly or indirectly with granular material outlet ports (26A or 26B respectively),
c) within each granular material discharge hopper (9A or 9A and 11A) or within each granular material discharge chute (9B or 9B and 11B) roof-shaped distributor elements (18A, 18B, 18C) are arranged above each granular material outlet port (26A or 26B respectively) in such a way that, like a roof, they cover at least the central area, preferably the entire area of the granular material outlet port (26A or 26B respectively), and
d) the distributor elements (18A, 18B, 18C) have lower edges (22) which with the side walls (14A or 14B respectively) of each (first) granular material discharge hopper (9A) or of each (first) granular material discharge chute (9B) form openings (22A or 22B respectively) for the granular material, preferably in one single horizontal plane, and in which
e) the distributor elements (18A, 18B, 18C) project from the side walls (14A or 14B respectively) on the inside of the hopper or on the inside of the chute respectively towards the interior of the hopper or the interior of the chute respectively and are arranged so that they are distributed over the periphery of the hopper or along the chute.

5. Inlet floor according to one of Claims 1 to 4, characterized in that skirts (23) which are arranged approximately vertically adjoin the lover edges (22) of the distributor elements (18A; 18B; 18C).

6. Inlet floor according to one of Claims 1 to 5, characterized in that below each first granular material discharge hopper (9A) or each first granular material discharge chute (9B) at least one second granular material discharge hopper (11A) or one second granular material discharge chute (11B) respectively is arranged and forms a gap (24A or 24B respectively) for fluid to pass through or has fluid-permeable wall surfaces or both.

7. Inlet floor according to Claim 6, characterized in that the granular material outlet port (20A or 20B respectively) of the first granular material discharge hopper (9A) or the first granular material discharge chute (9B) respectively is arranged lower than the inlet opening (25A or 25B respectively) of the second granular material discharge hopper (11A) or of the second granular material discharge chute (11B) respectively.

8. Inlet floor according to one of Claims 1 to 7, characterized by dividing walls (30) for the granular material which are arranged vertically and below the distributor elements (18A or 18).

9. Inlet floor according to one of Claims 1 to 8, characterized by a grid-like supporting grate (6) to receive granular material discharge hoppers (9A, 11A) which form ready-assembled modules.

10. Inlet floor according to Claim 9, characterized by a supporting grate frame (13) which holds the supporting grate (6).

11. Inlet floor according to one of Claims 6 to 10, characterized by granular material deflectors (31) which are arranged with reference to the direction of travel of the granular material within the cross-section of the granular material outlet port (20A or 20B) of the first granular material hopper (9A) or the first granular material discharge chute (9B) respectively.

12. Inlet floor according to Claim 11, characterized in that each of the granular material deflectors (31) forms a downwardly widening gap (32) with a wall surface of the second granular material discharge hopper (11A) or of the second granular material discharge chute (11B) respectively.

13. Inlet floor according to Claim 11 or 12, characterized in that the granular material deflectors (31) are at least partially movable.

14. Inlet floor according to one of Claims 11 to 13, characterized in that the granular material deflectors (31) with the granular material outlet port (20B) form a gap (33) for granular material and fluid to pass through.

15. Inlet floor according to one of Claims 1 to 14, characterized in that pipes (34) or the like with feed openings (35) for acting upon the fluid to be treated with a treatment medium are arranged on or within the distributor element(s) (18A; 18B; 18C) and/or granular material discharge hopper(s) or chutes (9A; 9B; 11A; 11B).

16. Inlet floor according to Claim 15, characterized in that the pipe (34) forms the ridge and/or at least one edge of the distributor element (18A; 18B; 18C) and/or of the granular material discharge hoppers or chutes (9A; 9B; 11A; 11B) or extends along the same.

17. Inlet floor according to one of Claims 1 to 16, characterized in that the angles of inclination of the roof of the distributor elements (18A or 18B) correspond to the angles of inclination of the side walls of the first granular material discharge hopper or of the first granular material discharge chute and are preferably smaller than or equal to the angle of friction of the granular material with the relevant wall surface.

18. Inlet floor according to one of Claims 1 to 17, characterized in that the width of the (first) granular material discharge hoppers or chutes (9A or 9B) or the centre-to-centre distance of adjacent (first) granular material discharge hoppers or chutes (9A or 9B) is 100 mm to 2000 mm, preferably 300 mm to 800 mm.

19. Inlet floor according to one of Claims 1 to 18, characterized by openings (16C) for inlet fluid in those regions of the side walls (14A or 14B) of the (first) granular material discharge hoppers or chutes (9A or 9B) which are in contact with the granular material (5).

20. Inlet floor according to one of Claims 1 to 19, characterized in that the distributor elements (18A or 18B respectively) are tightly connected to the walls of the hopper or chute at least in the region of the connecting edges of the roof surfaces.

21. Inlet floor according to one of Claims 1 to 20, characterized in that the inlet fluid can flow around the lower edges of the distributor elements (18A or 18B).

22. Moving bed reactor with a first inlet floor according to one of Claims 1 to 21, characterized by a second or further inlet floor(s) according to one of Claims 1 to 21 which is/are arranged above or below the first inlet floor.

23. Method of operating an inlet floor for moving bed reactors according to one of Claims 1 to 22, characterized in that when such a moving bed reactor is used an adsorption medium for the adsorption of at least one fluid component from a carrier fluid is used as the granular material, and when the fluid mixture enters below the roof-shaped distributor elements at least a third fluid component is added to the fluid mixture, this third fluid component reacting in the fluid treatment zone with at least one of the other components present.

24. Method according to Claim 23, characterized in that the carrier fluid is a combustion flue gas, the component to be adsorbed on the granular material is of SOₓ and NOₓ and the third fluid component is a reducing agent, particularly NH₃.

25. Method of operating an inlet floor for moving bed reactors according to one of Claims 1 to 22, particularly according to Claim 23 or 24, characterized in that when such a moving bed reactor is used the granular material is discharged in phases and possibly the quantity of granular material discharged during one phase corresponds to the quantity of the contaminated base layer of granular material.

26. Method according to one of Claims 23 to 25, characterized in that both the granular material and the inlet fluid to be treated are passed through a two-stage moving bed reactor in which each stage has one of the inlet floors and the inlet floors are arranged one above the other in such a way that the granular material outlet ports or tubular or shaft-like extensions on the latter serve as granular material feed elements for the lower moving bed and the fluid flowing off from the lower moving bed is delivered directly or indirectly to the upper inlet floor as inlet fluid.

27. Method of operating a moving bed reactor according to one of Claims 1 to 22, preferably according to one of Claims 23 to 26, characterized in that when such a moving bed reactor is used the inlet fluid is a gas or gas mixture and the moving bed reactor is operated in such a way that the dew point of the gas or of the gas mixture is not reached at least in the lower horizontal region of the fluid treatment zone.

28. Method of treating fluids on granular materials in at least one moving bed reactor with at least one inlet floor, characterized in that at least one inlet floor according to one of Claims 1 to 22 is used as the inlet floor.

29. Method according to Claim 26, characterized in that in the same moving bed reactor a plurality of inlet floors according to one or more of Claims 1 to 22 are used and are arranged one above the other, forming a plurality of moving beds.

30. Method according to Claim 28 or 29, characterized in that in at least one of the moving beds the fluid and the granular material are guided in counterflow with respect to one another.

31. Method according to one of Claims 28 to 30, characterized in that the fluid is delivered to the granular material at least partially in the region of the surfaces of the granular material which form as inlet surfaces below the distributor elements.

## Revendications

1. Rampe d'écoulement pour réacteurs a lit mobile se composant au moins d'entonnoirs de décharge de la matière en vrac (9A) disposés ou à disposer l'un à côté de l'autre ou d'une première rigole de décharge de la matière en vrac en forme d'entonnoir (9B), rampe d'écoulement dans laquelle dans les parois latérales (14A ou 14B) de chaque entonnoir ou de chaque rigole, sont disposés des orifices de passage (16A ou 16B) pour le fluide en écoulement, ces orifices étant répartis sur la périphérie de l'entonnoir ou le long de la rigole et où se trouve au-dessus de chaque orifice de passage (16A ou 16B), un élément de répartition (18A ou 18B) en forme de toit, ouvert vers le bas pour le fluide en écoulement, cet élément étant, sur la face interne de l'entonnoir ou de la rigole, à distance de la paroi latérale (14A ou 14B), en s'orientant vers l'intérieur de l'entonnoir ou de la rigole.

2. Rampe d'écoulement selon la revendication 1, caractérisée en ce que les éléments de répartition (18A ou 18B) sont reliés l'un à l'autre, de préférence en amont de l'embouchure de sortie de la matière en vrac (20A ou 20B) du premier entonnoir de décharge de la matière en vrac (9A) ou de la première rigole de décharge de la matière en vrac (9B).

3. Rampe d'écoulement selon la revendication 2, caractérisée en ce qu'en particulier dans le cas d'une structure en forme de rigole, sont prévus des éléments supplémentaires de répartition (18C) en forme de toit, lesquels sont disposés en angle par rapport aux autres éléments de répartition (18A ou 18B) et sont reliés avec ceux-ci en vue de poursuivre la répartition du fluide.

4. Rampe d'écoulement pour réacteurs à lit mobile comportant un dispositif de répartition pour le fluide d'écoulement, selon laquelle
a) la rampe d'écoulement se compose au moins d'entonnoirs de décharge de la matière en vrac (9A ou 9A et 11A) disposés ou à disposer les uns à côté des autres ou d'au moins une rigole de décharge de la matière en vrac en forme d'entonnoir (9B ou 9B et 11B).
b) les entonnoirs de décharge de la matière en vrac (9A ou 9A et 11A) ou les rigoles de décharge de la matière en vrac (9B ou 9B et 11B) sont munis, directement ou indirectement, d'embouchures de sortie de la matière en vrac (26A ou 26B),
c) à l'intérieur de chaque entonnoir de décharge de la matière en vrac (9A ou 9A et 11A) ou à l'intérieur de chaque rigole de décharge (9B ou 9B et 11B) sont disposés des éléments de répartition (18A, 18B, 18C) en forme de toit en amont de chaque embouchure de sortie de la matière en vrac (26A ou 26B), de sorte qu'ils recouvrent comme un toit, de préférence entièrement, au moins la zone centrale de surface de l'embouchure de sortie de la matière en vrac (26A ou 26B) et
d) les éléments de répartition (18A, 18B, 18C) présentent des bords inférieurs (22) qui relient, de préférence sur un plan horizontal unique, les orifices de passage de la matière en vrac (22A ou 22B) aux parois latérales (14A ou 14B) de chaque (premier) entonnoir de décharge de la matière en vrac (9A) ou de chaque (première) rigole de décharge de la matière en vrac (9B), et selon laquelle
e) les éléments de répartition (18A, 18B, 18C), sur la face interne de l'entonnoir ou de la rigole, sont disposés à distance des parois latérales (14A ou 14B) en s'orientant vers l'intérieur de l'entonnoir ou de la rigole, et sont répartis sur la périphérie de l'entonnoir ou le long de la rigole.

5. Rampe d'écoulement selon l'une des revendications 1 à 4, caractérisée en ce que des tabliers (23), disposés un peu en oblique, rejoignent les bords inférieurs (22) des éléments de répartition (18A, 18B, 18C).

6. Rampe d'écoulement selon l'une des revendications 1 à 5, caractérisée en ce qu'en aval de chaque entonnoir de décharge de la matière en vrac (9A) ou de chaque rigole de décharge de la matière en vrac (9B) est disposé au moins un deuxième entonnoir de décharge de la matière en vrac (11A) ou une deuxième rigole de décharge de la matière en vrac (11B, 24A ou 24B) formant une fente de passage du fluide ou présentant des surfaces de paroi perméables au fluide ou bien les deux.

7. Rampe d'écoulement selon la revendication 6, caractérisée en ce que l'embouchure de sortie de la matière en vrac (20A ou 20B) du premier entonnoir de décharge de la matière en vrac (9A) ou de la première rigole de décharge de la matière en vrac (9B) est placée plus bas que l'orifice d'entrée (25A ou 25B) du deuxième entonnoir de décharge de la matière en vrac (11A) ou de la deuxième rigole de décharge de la matière en vrac (11B).

8. Rampe d'écoulement selon l'une des revendications 1 à 7, caractérisée par des cloisons séparatrices de la matière en vrac (30) disposées verticalement et en aval des éléments de répartition (18A ou 18B).

9. Rampe d'écoulement selon l'une des revendications 1 à 8, caractérisée par une grille support quadrillée (6) pour la réception d'entonnoirs de décharge de la matière en vrac (9A, 11A) formant des modules assemblés finis.

10. Rampe d'écoulement selon la revendication 9, caractérisée par un cadre (13) de grille support maintenant la grille support (6).

11. Rampe d'écoulement selon l'une des revendications 6 à 10, caractérisée par des surfaces conductrices de la matière en vrac (31), qui sont disposées, en fonction du sens de déplacement de la matière en vrac, à l'intérieur de la coupe transversale de l'embouchure de sortie de la matière en vrac (20A ou 20B) du premier entonnoir de décharge de la matière en vrac (9A) ou de la première rigole de décharge de la matière en vrac (9B).

12. Rampe d'écoulement selon la revendication 11, caractérisée en ce que les surfaces conductrices de la matière en vrac (31) forment une fente (32) s'élargissant vers le bas présentant, pour chacune, une surface de paroi du deuxième entonnoir de décharge de la matière en vrac (11A) ou de la deuxième rigole de décharge de la matière en vrac (11B).

13. Rampe d'écoulement selon la revendication 11 ou 12 caractérisée en ce que les surfaces conductrices de la matière en vrac (31) sont au moins mobiles partiellement.

14. Rampe d'écoulement selon l'une des revendications 11 à 13, caractérisée en ce que les surfaces conductrices de la matière en vrac (31) forment, avec l'embouchure de sortie de la matière en vrac (20B), une fente de passage (33) du fluide et de la matière en vrac.

15. Rampe d'écoulement selon l'une des revendications 1 à 14, caractérisée en ce que sur ou à l'intérieur de l'(des) élément(s) de répartition (18A, 18B, 18C) et/ou de l'(des) entonnoir(s) ou de la (des) rigole(s) de décharge de la matière en vrac (9A, 9B, 11A, 11B) sont disposés des conduits (34) ou similaires présentant des orifices de répartition (35) pour l'admission du fluide à traiter avec un milieu de traitement.

16. Rampe d'écoulement selon la revendication 15, caractérisée en ce que le conduit (34) forme le faite et/ou au moins un bord de l'élément de répartition (18A, 18B, 18C) et/ou des entonnoirs ou rigoles de décharge de la matière en vrac (9A, 9B, 11A, 11B), ou bien s'étend le long de celui-ci.

17. Rampe d'écoulement selon l'une des revendications 1 à 16, caractérisée en ce que les angles d'inclinaison du toit des éléments de répartition (18A ou 18B) correspondent aux angles d'inclinaison des parois latérales du premier entonnoir de décharge de la matière en vrac ou de la premier rigole de décharge de la matière en vrac, et sont, de préférence, inférieurs ou égaux à l'angle de friction de la matière en vrac avec la surface de paroi concernée.

18. Rampe d'écoulement selon l'une des revendications 1 à 17, caractérisée en ce que la largeur des (premiers) entonnoirs ou (premières) rigoles de décharge de la matière en vrac (9A ou 9B) ou bien l'écart central des (premiers) entonnoirs ou des (premières) rigoles de décharge de la matière en vrac (9A ou 9B) s'élève de 100 à 2000 mm, de préférence entre 300 et 800 mm.

19. Rampe d'écoulement selon l'une des revendications 1 à 18, caractérisée par des orifices de passage (16C) pour l'écoulement du fluide dans les zones des parois latérales (14A, 14B) des (premiers) entonnoirs ou des (premières) rigoles de décharge de la matière en vrac (9A ou 9B), qui sont en contact avec la matière en vrac (5).

20. Rampe d'écoulement selon l'une des revendications 1 à 19, caractérisée en ce que les éléments de répartition (18A ou 18B) sont reliés, de manière étanche, au moins dans la zone des bords de jonction des surfaces de toit, avec les parois d'entonnoir ou de rigole.

21. Rampe d'écoulement selon l'une des revendications 1 à 20, caractérisée en ce que les bords inférieurs des éléments de répartition (18A ou 18B) sont entourés par le fluide en écoulement.

22. Réacteur à lit mobile présentant une première rampe d'écoulement selon l'une des revendications 1 à 21, caractérisé par une deuxième ou d'autres rampes d'écoulement selon l'une des revendications 1 à 21, laquelle/lesquelles est/sont disposée(s) au-dessus ou en dessous de la première rampe d'écoulement.

23. Procédé pour le fonctionnement d'une rampe d'écoulement pour réacteurs à lit mobile selon l'une des revendications 1 à 22, caractérisé en ce que, par l'utilisation d'un réacteur à lit mobile de ce type, un produit absorbant est utilisé en tant que matière en vrac pour absorber au moins un composant de fluide à partir d'un fluide porteur et en ce qu'à l'entrée du mélange de fluide sous les éléments de répartition en forme de toit, au moins un troisième composent de fluide est ou sera mélangé au mélange de fluide lequel réagit, dans la zone de traitement de fluide, avec au moins l'un des autres composants présents.

24. Procédé selon la revendication 23, caractérisé en ce que le fluide porteur est un gaz de fumée de combustion, en ce que le composent de la matière en vrac à absorber se compose de SO_{X} et de NO_{X} et que le troisième composant de fluide est un agent de réduction en particulier du NH₃.

25. Procédé pour l'exploitation d'une rampe d'écoulement pour réacteurs à lit mobile selon l'une des revendications 1 à 22, en particulier selon la revendication 23 ou 24, caractérisé en ce que par l'utilisation d'un réacteur à lit mobile de ce type, la matière en vrac est déchargée par cycle et éventuellement la quantité de matière en vrac déchargée pendant un cycle correspond à la quantité de la couche de fond contaminée de la matière en vrac.

26. Procédé selon l'une des revendications 23 à 25, caractérisé en ce que autant la matière en vrac que le fluide en écoulement à traiter sont guidés à travers un réacteur biétagé à lit mobile, dans lequel chaque étage présente l'une des rampes d'écoulement et les rampes d'écoulement sont disposées l'une au-dessus de l'autre de sorte que les embouchures de sortie de la matière en vrac ou les ajutages en forme de conduits ou de puits sur ces dernières servent d'éléments de répartition de la matière en vrac pour le lit mobile inférieur et le fluide découlant de lit mobile inférieur est amené, directement ou indirectement, à la rampe d'écoulement supérieure en tant que fluide en écoulement.

27. Procédé pour l'exploitation d'un réacteur à lit mobile selon l'une des revendications 1 à 22, en particulier selon l'une des revendications 23 à 26, caractérisé en ce que par l'utilisation d'un réacteur à lit mobile de ce type, le fluide en écoulement est un gaz ou un mélange gazeux et le réacteur à lit mobile est exploité de sorte que le point de condensation du gaz ou du mélange gazeux, au moins dans le domaine horizontal inférieur de la zone de traitement de fluide, n'est pas atteint.

28. Procédé pour le traitement de fluides de matières en vrac, dans au moins un réacteur à lit mobile présentant au moins une rampe d'écoulement, caractérisé en ce qu'il est utilisé, en tant que rampe d'écoulement, au moins une rampe d'écoulement selon l'une des revendications 1 à 22.

29. Procédé selon la revendication 26, caractérisé en ce que dans le même réacteur à lit mobile, plusieurs rampes d'écoulement disposées les unes au-dessus des autres selon l'une ou plusieurs des revendications 1 à 22 sont utilisées selon la structure de plusieurs lits mobiles.

30. Procédé selon la revendication 28 ou 29, caractérisé en ce que, dans au moins l'un des lits mobiles, le fluide et la matière en vrac sont guidés l'un vers l'autre à contre-courant.

31. Procédé selon l'une des revendications 28 à 30, caractérisé en ce que le fluide est amené à la matière en vrac, au moins partiellement, dans la zone des faces supérieures de la matière en vrac conçues comme surfaces libres d'écoulement, à l'intérieur des éléments de répartition.
